# DEMANDE DE BREVET EUROPEEN

(11) **EP 0 884 403 A1**
(43) Date de publication de la demande: **16.12.1998**
(21) Numéro de dépôt: 98401362.3
(22) Date de dépôt: 08.06.1998
(51) Int. Cl.: C23C 28/02

(54) **Materiau multicouches à revetement anti-erosion, anti-abrasion, et anti-usure sur substrat en aluminium, en magnesium ou en leurs alliages.**

(30) Priorité: 10.06.1997 FR 9707171
(71) Demandeur: COMMISSARIAT A L'ENERGIE ATOMIQUE, 75015 Paris (FR)
(72) Inventeur: Danroc, Joel, 38100 Grenoble (FR); Juliet, Pierre, 38100 Grenoble (FR); Rouzaud, André, 38170 Seyssinet-Pariset (FR)
(74) Mandataire: Dubois-Chabert, Guy

(57) **Abrégé**

La présente invention est relative à un matériau multicouches comprenant un substrat en aluminium, en magnésium ou en un de leurs alliages, ayant éventuellement subi un traitement de surface, ce substrat étant pourvu d'un revêtement comprenant un dépôt à base de tungstène et une sous-couche - intercalée entre ledit substrat et ledit dépôt- d'un matériau présentant des propriétés mécaniques et thermomécaniques intermédiaires de celles dudit substrat et dudit dépôt. Cette sous-couche est composée d'au moins une couche d'un matériau choisi parmi le chrome, le molybdène, le niobium, le titane, le zirconium, leurs nitrures et carbures, les solutions solides de carbone et d'azote dans lesdits métaux, et les aciers et améliore grandement l'adhérence dudit revêtement sur ledit substrat.

L'invention a également trait au revêtement anti-érosion, anti-abrasion, anti-usure comprenant ledit dépôt à base de tungstène et ladite sous-couche.

## Description

La présente invention concerne un matériau multicouches à revêtement anti-érosion, anti-abrasion et anti-usure sur substrat en aluminium, en magnésium ou en leurs alliages.

Plus précisément, la présente invention est relative à un matériau multicouches comprenant un substrat en aluminium, en magnésium ou en un de leurs alliages, ayant éventuellement subi un traitement de surface, ce substrat étant pourvu d'un revêtement comprenant un dépôt à base de tungstène et une sous-couche -intercalée entre ledit substrat et ledit dépôt-d'un matériau présentant des propriétés mécaniques et thermomécaniques intermédiaires de celles dudit substrat et dudit dépôt.

L'invention a également trait au revêtement anti-érosion, anti-abrasion, anti-usure comprenant ledit dépôt à base de tungstène et ladite sous-couche.

Le domaine technique de l'invention peut être défini comme étant celui de la protection anti-érosion, anti-abrasion et anti-usure de matériaux.

L'érosion des matériaux constituant des pièces mécaniques soumises à l'impact de particules abrasives telles que le sable ou des poussières de matériaux solides et durs, est un problème industriel bien connu dans de nombreux domaines, notamment dans l'aéronautique, où pour des raisons de recherche de performances, on utilise des substrats les plus légers possibles.

Les pièces soumises à de telles conditions sont par exemple les hélices, les rotors et les aubes de compresseur de moteurs d'avions dans lesquels l'usure par érosion des bords d'attaque des aubes entraîne une dégradation des performances du moteur.

Le même type de problème se rencontre également dans tous les secteurs techniques où des pièces, telles que des pièces en aluminium ou en alliage, fixes ou en mouvement, sont susceptibles de recevoir un bombardement de particules dures, c'est notamment le cas pour les aubes des turbines des centrales électriques, dans la construction et le bâtiment etc..

La protection des matériaux contre l'usure et/ou l'écaillage est un problème analogue qui se rencontre en particulier avec des pièces en alliages légers telles que des pièces de type poulie.

Le taux d'érosion des matériaux se définit par la masse de matière éjectée pour une masse de particules incidentes donnée. Ce taux d'érosion varie avec l'angle d'incidence des particules solides qui frappent la surface du matériau concerné.

Les mécanismes d'érosion ont été étudiés par différents auteurs et notamment par J.P. Massoud, dans l'ouvrage : "Comportement à l'érosion par des particules solides d'un alliage de titane TA6V traité par laser", Thèse de Doctorat en Génie des Matériau, INSA de Lyon, (1988) . Ces études ont permis de distinguer essentiellement deux types de comportement des matériaux soumis à l'érosion :
- un comportement caractéristique des matériaux ductiles tels que les métaux, dont le taux d'érosion est faible avec un jet de particules solides à incidence normale (par rapport au plan du matériau) ;
- un comportement caractéristique des matériaux fragiles tels que le verre, les céramiques et les matériaux durs tels que les carbures, dont le taux d'érosion est faible avec un jet de particules à incidence oblique.

Par ailleurs, des études complémentaires réalisées par T. Foley and A. Levy, dans leur article, "The effect of Heat Treatment on the Erosion Behaviour of Steel", Proceedings of the Conference on Wear of Materials, Reston, VA, Avril 11-14, 1983, ASME, 1983, p.346, ont montré que la microstructure du matériau joue également un rôle important. Par exemple, le taux d'érosion des aciers se trouvant sous différents états microstructuraux -par exemple l'acier XC75 sous forme de perlite grossière, de perlite fine ou de structure globulisée ou l'acier XC20 sous ses trois formes globulisées- est directement lié à la répartition des phases dures, fragiles et ductiles dans l'alliage, alors que la dureté de ces aciers varie peu avec l'état de la microstructure.

De plus, l'érosion varie également en fonction de la forme, de la taille et de la répartition des précipités recouvrant un substrat. G. Hickey, D. Boone, A. Levy et J. Stiglich, dans leur article "Erosion of Conventionnal and Ultrafine-Grained Materials", Thin Solid Films, 118, 321 (1984), ont montré que des précipités fins de SiC sur de l'acier présentaient une meilleure résistance à l'érosion qu'une précipitation grossière.

Enfin, le taux d'érosion dépend d'un certain nombre de paramètres liés à la nature de l'érodant tels que la taille et forme des particules érodantes, leur dureté, et leur fragilité, ainsi que des conditions des tests, représentés notamment par la vitesse des particules et par leur angle d'incidence.

En conséquence, il ressort des études précédemment citées que les paramètres pouvant intervenir dans les phénomènes d'érosion et les influencer sont nombreux, qu'il est quelquefois difficile de comparer convenablement le comportement de différents matériaux et que la mise au point d'un revêtement-- anti-érosion, anti-abrasion et anti-usure est extrêmement aléatoire.

Toutefois, afin de répondre à ces problèmes d'érosion, d'usure et d'abrasion, certains matériaux ont déjà été proposés.

C'est ainsi que divers matériaux comme les alliages de métaux réfractaires, les carbures, les nitrures ou les borures par exemple, ont été étudiés et utilisés comme revêtements anti-érosion, anti-abrasion et anti-usure. Ces matériaux ont été déposés, par exemple, sur des aubes de compresseurs d'avions, par diverses techniques telles que la projection plasma, le procédé CVD (dépôt chimique en phase vapeur), le procédé par arc transféré, le procédé par pulvérisation cathodique ou d'autres techniques de dépôts physiques ou chimiques.

De nombreux revêtements anti-érosion, anti-abrasion et anti-usure sont à base de tungstène car les propriétés mécaniques de ce métal, et notamment sa dureté Vickers élevée associée à un haut module d'élasticité, le rendent particulièrement aptes à une telle utilisation.

Ainsi, le document EP-A-0 411 646 décrit-il un revêtement multicouche anti-érosion et anti-abrasion comprenant une couche de tungstène et une deuxième couche d'un mélange de tungstène et de carbure de tungstène.

De même, le document EP-A-0 328 084 est-il relatif à un revêtement anti-érosion et anti-abrasion dans lequel une couche de tungstène puis une couche d'un mélange de tungstène et de carbure de tungstène sont déposées sur un substrat.

Le document FR-A-2 682 400 concerne un revêtement multicouche anti-érosion et anti-abrasion constitué d'au moins une couche ductile de tungstène métallique et d'au moins un couche dure d'une solution solide de carbone, les deux types de couches étant alternés.

Le substrat recouvert par ce revêtement multicouches est choisi par exemple parmi un alliage de titane, un acier oxydable, un alliage d'aluminium, des polymères et des matériaux composites.

Cependant, il s'est avéré que dans le cas des substrats constitués d'aluminium, de magnésium, d'alliages de magnésium ou d'aluminium, ayant éventuellement subi un traitement de surface tels que les substrats anodisés, l'adhérence des revêtements décrits dans ce document était notamment insuffisante, en particulier dans le cas de sollicitations sévères.

Le document FR-A-2 693 477 concerne un revêtement multicouches pour la protection de surfaces contre l'érosion et l'abrasion qui comprend, déposées en alternance sur un substrat, des couches de tungstène, ou d'alliage de tungstène et des couches de solution solide de tungstène et d'azote. La nature du substrat n'est pas précisée ; dans les exemples on utilise des substrats en acier ou en alliage de titane, et le problème spécifique de l'adhérence des revêtements anti-érosion, anti-abrasion, anti-usure sur des substrats en aluminium, magnésium, ou alliages de ceux-ci, n'est pas évoqué.

Le document EP-A-0 018 432 décrit des pièces métalliques munies d'un revêtement anti-usure et anticorrosion. en particulier en carbure de tungstène.

Ces pièces métalliques sont en particulier des pièces d'horlogerie telles que des boîtiers et bracelets de montres et des bijoux.

En général, il est prévu entre la couche de protection- et la pièce en métal (acier, cuivre, aluminium et alliages) de telles pièces une couche intermédiaires dite couche d'adhésion.

Selon ce document, une pièce en aluminium, en cuivre ou en un de leurs alliages, avec une faible dureté et un fort coefficient de dilatation thermique, est ainsi pourvue d'une couche intermédiaire d'une épaisseur minimale de 20 µm qui a une dureté supérieure à celle de la pièce métallique, mais cependant inférieure à celle du carbure de tungstène et un coefficient de dilatation thermique inférieur à celui de la pièce métallique mais cependant supérieur à celui du carbure de tungstène. La couche intermédiaire peut être constituée de Ni, Co, NiP, CoP, NiB, CoB, Cu, Fe, NiSn, NiFe ou CuSn.

Du fait de l'épaisseur relativement importante de la couche intermédiaire, la transition entre les propriétés du carbure de tungstène et celles du métal se produit de manière progressive permettant en particulier une meilleure adhérence.

Dans ce document la couche intermédiaire a donc une épaisseur élevée, impérativement supérieure à 20 µm, sinon la transition progressive entre les propriétés du substrat et du dépôt à base de tungstène ne peut être assurée, par ailleurs les problèmes spécifiques posés par les substrats en aluminium, ou en magnésium ne sont pas évoqués.

Il existe donc un besoin pour un matériau multicouches comprenant un substrat et un revêtement anti-érosion, anti-abrasion, anti-usure qui, en particulier, ne présente pas de problèmes d'adhérence du revêtement sur des substrats en aluminium, magnésium, ou alliages de ceux-ci.

En d'autres termes, il existe un besoin actuellement non satisfait pour un matériau multicouches comprenant un substrat en aluminium, magnésium, ou alliages de ceux-ci et un revêtement comprenant un dépôt à base de tungstène, ledit revêtement ayant une excellente adhérence sur ledit substrat.

Ladite amélioration de l'adhérence doit d'autre part être réalisée sans que les propriétés de résistance à l'érosion, à l'usure, et à l'abrasion, ne soient affectées. Enfin, il serait souhaitable qu'un tel revêtement puisse être déposé par des procédés classiques et éprouvés de dépôt.

L'invention a donc pour objectif de fournir un matériau multicouches comprenant un substrat en aluminium, en magnésium ou en un de leurs alliages et un revêtement anti-érosion, anti-abrasion et anti-usure comprenant un dépôt à base de tungstène qui satisfait, entre autres, à l'ensemble des besoins et critères mentionnés ci-dessus, qui élimine les inconvénients et difficultés rencontrés avec les matériaux multicouches de l'art antérieur et qui résolve les problèmes mis en évidence dans l'art antérieur.

Cet objectif, et d'autres encore, sont atteints selon l'invention par un matériau multicouches comprenant un substrat en aluminium, en magnésium ou en un de leurs alliages, et un revêtement anti-érosion, anti-abrasion, et anti-usure, comprenant un dépôt à base de tungstène, ledit revêtement comprenant en outre une sous-couche d'un matériau présentant des propriétés mécaniques et thermomécaniques intermédiaires de celles dudit substrat et de celles dudit dépôt, ladite sous-couche étant intercalée entre ledit substrat et ledit dépôt à base de tungstène, caractérisé en ce que ladite sous-couche est composée d'au moins une couche d'un matériau ehoisi parmi le chrome, le molybdène, le niobium, le titane, le zirconium, leurs nitrures et carbures, les solutions solides de carbone et d'azote dans lesdits métaux, et les aciers.

Du fait de la réactivité élevée de la sous-couche du matériau multicouches selon l'invention la liaison chimique entre le dépôt à base de tungstène et le substrat se trouve grandement renforcée. L'adhérence est ainsi fortement améliorée.

La sous-couche selon l'invention présente des propriétés mécaniques et thermomécaniques intermédiaires de celles du substrat et du dépôt.

Par propriétés thermomécaniques intermédiaires, on entend généralement que cette sous-couche présente par exemple un coefficient de dilatation thermique intermédiaire de celui du substrat et du dépôt à base de tungstène, de ce fait, la sollicitation de l'interface substrat-revêtement lors de variations de température est diminuée et répartie, et la tenue thermique de l'ensemble est donc très supérieure, notamment lorsqu'il est soumis à un cyclage thermique.

Par ailleurs, les élévations de températures intervenant lors des procédés de fabrication ont, grâce à la présence de la sous-couche selon l'invention, des effets résiduels de moindre importance.

Par propriétés mécaniques intermédiaires, on entend généralement que la sous-couche présente par exemple une dureté (dureté "Vickers") intermédiaire de celle du substrat et de celle du dépôt à base de tungstène. Le durcissement intermédiaire apporté par la sous-couche permet un passage plus graduel du substrat, par exemple de l'aluminium, au tungstène. La tenue de l'ensemble sous forte sollicitation c'est-à-dire sous forte exposition à des facteurs d'usure, d'abrasion et d'érosion s'en trouve améliorée.

Il est à noter que les effets, avantages et améliorations apportés par l'invention ne le sont que pour les matériaux spécifiques indiqués ci-dessus dont la mise en oeuvre n'est ni décrite, ni suggérée par l'art antérieur ; en particulier par le document EP-A-0 018 432.

Il a été mis en évidence selon l'invention que seuls les matériaux spécifiques cités plus haut constituent la sous-couche permettaient de manière surprenante d'atteindre les objectifs mentionnés ci-dessus dans le cas particulier des substrats en magnésium, en aluminium ou en un de leurs alliages.

Conformément à l'invention, le substrat est en effet généralement un substrat en aluminium, en magnésium ou en un de leurs alliages.

Le substrat peut également avoir subi un traitement de surface qui en modifie les propriétés, par exemple une anodisation.

Un matériau préféré pour le substrat du matériau multicouches selon l'invention est, par exemple, l'aluminium ou un alliage d'aluminium, anodisé.

La sous-couche selon l'invention peut comprendre une seule couche ou bien un empilement de plusieurs couches, c'est-à-dire par exemple de 2 à 4 couches.

La sous-couche selon l'invention peut ne comprendre qu'une seule couche formée d'un des matériaux cités plus haut mais elle peut aussi comprendre un empilement de plusieurs de ces couches à savoir de 2 à 4 couches.

Chaque couche, seule, ou faisant partie d'un empilement a par exemple une épaisseur de 0,01 à 10 µm, de préférence de 0,5 à 5 µm par exemple de 1 µm.

Il est à noter, et c'est là également un des avantages et effets inattendus de l'invention qu'il est surprenant que les objectifs cités plus haut soient atteints avec une épaisseur aussi faible alors que dans l'art antérieur, il est absolument impératif que la sous-couche est une épaisseur d'au moins 20 µm,

Cette réduction notable de l'épaisseur de la sous-couche est liée au choix d'un matériau spécifique pour la sous-couche et ne peut être obtenue avec les matériaux de l'art antérieur.

Ainsi la sous-couche selon l'invention peut elle être composée d'une seule couche d'un matériau choisi parmi les métaux cités plus haut tels que le chrome, le molybdène, le niobium, le titane, le zirconium et les aciers. Parmi les aciers, on préférera par exemple les aciers inoxydables tels que les aciers de type 18 Cr/10 Ni.

Une telle couche métallique unique, réalisée en un matériau spécifique selon l'invention, d'une épaisseur par exemple de 0,01 à 10 µm en particulier 1 µm, présente un coefficient de dilatation compris entre celui du substrat en magnésium, aluminium ou en alliage de magnésium ou d'aluminium et celui du tungstène formant la base du dépôt.

La sous-couche selon l'invention peut également être composée d'un empilement de plusieurs couches d'un matériau métallique cité plus haut. Un tel empilement comprend généralement de 2 à 4 couches de préférence de 2 à 4 couches par exemple 3 couches. Chaque couche de l'empilement formant la sous-couche a une épaisseur analogue à celle d'une couche unique citée plus haut, à savoir par exemple 0,01 à 10 µm.

Le nombre, l'ordre, la nature et la succession des couches peuvent être quelconque mais l'empilement des plusieurs couches formant la sous-couche est de préférence disposé selon un arrangement qui permet d'assurer la transition des propriétés thermomécaniques et mécaniques entre d'une part le substrat et d'autre part le dépôt à base de tungstène.

La sous-couche selon l'invention peut également ne comprendre qu'une seule couche d'un matériau choisi parmi les carbures et nitrures de chrome, molybdène, niobium, titane, zirconium et les solutions solides de carbone ou d'azote dans ceux-ci.

La sous-couche selon l'invention peut aussi être composée d'un empilement comprenant une première couche métallique de Cr, Mo, Nb, Zr, ou Ti, et une deuxième couche de nitrure ou de carbure du même métal que ladite première couche métallique, ou d'une solution solide d'azote ou de carbone dans le même métal que ladite première couche métallique.

La transition entre lesdites première couche et deuxième couche peut être assurée soit de façon brutale, c'est-à-dire que l'on a simplement un empilement de type bicouche, soit de façon progressive, par l'intermédiaire d'une couche à gradient de composition placée entre ladite première couche et ladite deuxième couche.

La sous-couche selon l'invention peut encore être constituée d'une seule couche de nitrure d'aluminium et de magnésium dont l'épaisseur est comme déjà mentionnée plus haut par exemple de 0,01 à 10 µm.

Ou bien, la sous-couche selon l'invention peut être constituée d'une couche unique d'aluminium-tungstène à gradient de composition dans laquelle on passe progressivement de l'aluminium pur -au voisinage du substrat- au tungstène pur -au voisinage du dépôt.

Enfin, la sous couche selon l'invention peut aussi être constituée d'une seule couche d'oxyde d'aluminium.

L'invention a également trait à un revêtement anti-érosion, anti-abrasion et anti-usure, pour substrat en aluminium, en magnésium ou en un de leurs alliages, comprenant un dépôt à base de tungstène, ledit revêtement comprenant en outre une sous-couche d'un matériau présentant des propriétés mécaniques et thermomécaniques intermédiaires de celles dudit substrat et de celles dudit dépôt, caractérisé en ce que ladite sous-couche est composée d'au moins une couche d'un matériau choisi parmi le chrome, le molybdène, le niobium, le titane, le zirconium, leurs nitrures et carbures, les solutions solides de carbone et d'azote dans lesdits métaux, et les aciers.

La sous-couche de ce revêtement est telle que définie plus haut, tandis que le dépôt à base de tungstène est tel que défini dans ce qui suit.

L'invention sera mieux comprise à la lecture de la description suivante d'un mode de réalisation de l'invention donnée à titre d'exemple illustratif et non limitatif.

Comme on l'a déjà indiqué plus haut, le matériau multicouches selon l'invention comprend un substrat en aluminium, en magnésium ou en un de leurs alliages, il est toutefois bien évident que tout matériau composite comprenant une proportion importante d'aluminium ou de magnésium avec un autre matériau pourrait également rentrer dans le cadre du substrat selon l'invention.

Sur ce substrat est déposé un revêtement anti-érosion, anti-abrasion et anti-usure qui comprend tout d'abord une sous-couche selon l'invention puis un dépôt à base de tungstène. L'épaisseur de la sous-couche est généralement de 0,01 à 10 µm, de préférence de 0,5 à 5 µm, lorsqu'elle est constituée d'une couche unique, et généralement de 1 à 10 µm lorsqu'elle est formée d'un empilement comprenant plusieurs couches. On constate donc que selon l'invention, l'épaisseur de la sous-couche est nettement réduite par rapport à l'art antérieur, en particulier par rapport au document EP-A-0 018 432 et qu'une adhérence supérieure est obtenue.

Une telle diminution de l'épaisseur tout en améliorant les propriétés du revêtement et en particulier son adhérence est due essentiellement au choix des matériaux spécifiques de la sous-couche selon l'invention.

Le dépôt à base de tungstène peut être tout dépôt à base de tungstène convenant pour donner les propriétés anti-érosion, anti-abrasion, et anti- usure voulues.

Ledit dépôt à base de tungstène pourra donc comprendre au moins une couche en un matériau choisi parmi par exemple parmi le tungstène, les carbures, siliciures et nitrures de tungstène, les alliages de tungstène et leurs mélanges et les solutions solides d'azote ou de carbone dans le tungstène.

Le dépôt à base de tungstène peut comprendre une seule de ces couches ou un empilement de plusieurs de ces couches c'est-à-dire par exemple de 2 à 24 couches.

L'épaisseur totale du dépôt à base de tungstène est généralement de 5 à 60 µm.

L'épaisseur de la couche ou de chaque couche du dépôt étant de préférence de 1 à 10 µm.

L'épaisseur totale du revêtement (dépôt et sous-couche) est généralement de 5 à 70 µm.

Un tel empilement peut par exemple, comme cela est décrit dans le document FR-A-2 682 400 déjà cité comprendre au moins une couche -couche ductile- de tungstène métallique et au moins une couche -couche dure- d'une solution solide de carbone dans du tungstène. Cette alternance de couches peut se répéter c'est-à-dire que le dépôt à base de tungstène peut comprendre un empilement de 2 jusqu'à 20 de ces structures bicouches.

Le dépôt à base de tungstène peut aussi comme c'est le cas dans le document FR-A-2 693 477 comprendre en alternance au moins une couche de tungstène ou d'alliage de tungstène, et au moins une couche de solution solide de tungstène et d'azote.

Pour préparer le matériau multicouches selon l'invention, on commence de préférence par se munir d'un substrat poli à la pâte de diamant.

On effectue ensuite le dépôt de la couche ou des couches composant la sous-couche selon l'invention. La couche ou chacune des couches formant la sous-couche peut être préparée par un procédé de dépôt classique connu de l'homme du métier dans ce domaine de la technique. De même, les conditions opératoires et les paramètres régissant ces procédés de dépôt peuvent être facilement déterminés par l'homme du métier et ne seront pas décrits plus en détail.

Ainsi, par exemple, dans le cas du dépôt d'une couche unique en métal tel que chrome, molybdène, niobium, zirconium, titane etc, ... on préfère déposer cette couche par le même procédé que celui qui est généralement utilisé pour réaliser le dépôt à base de tungstène, c'est-à-dire par pulvérisation cathodique ("sputtering" dans les ouvrages en anglais), mais il est également possible de réaliser ce dépôt par tout autre type de procédé tel que l'évaporation, le dépôt chimique en phase vapeur (CVD ou Chemical Vapour Deposition dans les ouvrages en anglais), le dépôt chimique en phase vapeur assisté par plasma (PACVD ou Plasma Assisted Chemical Vapour Deposition), le dépôt chimique -en phase vapeur à partir de composés organométalliques (MOCVD ou Metal Organic Chemical Vapour Deposition), ou encore les procédés de dépôt chimique ou électrochimique.

Dans le cas d'une sous-couche formée d'un empilement de couches, chaque couche peut être déposée par le même procédé ou par des procédés différents.

Ainsi, si l'on souhaite effectuer le dépôt de plusieurs couches métalliques réalisées dans un arrangement assurant la transition des propriétés mécaniques et thermomécaniques, par exemple en commençant le dépôt par une couche de titane puis en le poursuivant par une couche de chrome puis une couche de molybdène avant de procéder au dépôt du tungstène lui-même, un tel arrangement peut être obtenu par pulvérisation mais aussi par tout autre ensemble de procédé adapté tel que l'évaporation sous vide.

Pour une sous-couche constituée de nitrure d'aluminium ou de magnésium, cette couche peut être obtenue soit par un procédé de dépôt physique ou chimique, soit par un traitement de diffusion (nitruration assistée ou non par un plasma).

Sur le substrat pourvu de la sous-couche selon l'invention, on dépose ensuite le dépôt à base de tungstène, ce dépôt est réalisé de manière classique par un procédé ou un ensemble de procédés connu(s). De préférence, comme indiqué ci-dessus, ce dépôt est réalisé par pulvérisation cathodique.

Il est à noter que l'un des effets inattendus et avantages apportés par la présence dans la matériau multicouches selon l'invention d'une sous-couche, est que l'influence des élévations de température lors des procédés de fabrication est nettement moins préjudiciable que dans les matériaux de l'art antérieur sans sous-couche.

Les exemples suivants donnés à titre illustratif et non limitatif illustrent la préparation et les propriétés de matériaux multicouches selon l'invention.

### EXEMPLES

### Exemple 1

Cet exemple illustre l'amélioration de l'adhérence sur un substrat d'aluminium anodisé, d'un revêtement selon l'invention comportant une sous-couche de titane.

### Exemple 1A

Des dépôts de tungstène de 10 µm sont réalisés par pulvérisation cathodique sur un substrat d'aluminium anodisé. Un test de rayure instrumenté permet de mesurer une charge critique qui est proportionnelle à l'adhérence du dépôt.

Dans ce cas, conforme à l'art antérieur, où l'on note l'absence d'une sous-couche c'est-à-dire que le tungstène est directement en contact avec l'aluminium anodisé, la valeur moyenne mesurée de la charge critique est de 5 N.

### Exemple 1B

De manière analogue à l'exemple 1A, on réalise des dépôts de tungstène de 10 µm par pulvérisation cathodique, à la différence que le substrat d'aluminium anodisé est, conformément à l'invention, préalablement recouvert d'une couche de titane de 1 µm déposée également par pulvérisation.

On mesure, de la même manière que dans l'exemple lA la charge critique qui est proportionnelle à l'adhérence du dépôt.

Dans ce cas, où une sous-couche est présente conformément à l'invention, la valeur moyenne mesurée de la charge critique est de 12 N soit plus de deux fois supérieure à celle de l'exemple 1A.

### Exemple 2

Cet exemple illustre l'amélioration de la tenue au cyclage thermique, obtenue avec un matériau multicouches selon l'invention comportant une sous-couche.

### Exemple 2A

Des dépôts multicouches W/W(C) (c'est-à-dire comprenant au moins une couche de tungstène métallique et au moins une couche d'une solution solide de carbone dans le tungstène) de 50 µm sont réalisés par pulvérisation cathodique sur un substrat d'aluminium anodisé.

Les éprouvettes sont ensuite testées sur un banc de cyclage thermique entre 100°C et 400°C.

Ces éprouvettes, conformes à l'art antérieur, réalisées sans sous-couche, présentent des endommagements au bout de 50 cycles.

### Exemple 2B

De manière analogue à l'exemple 2A, on réalise des dépôts multicouches W/W(C) d'une épaisseur de 50 µm par pulvérisation cathodique, à la différence que le substrat d'aluminium anodisée est, conformément à l'invention, préalablement recouvert d'une couche de titane de 1 µm et d'une couche de molybdène de 1 µm, déposées également par pulvérisation.

Les éprouvettes ainsi préparées sont ensuite testées de la même manière que dans l'exemple 2A.

Ces éprouvettes, réalisées conformément à l'invention avec des sous-couches ne présentent des traces notables d'endommagement qu'au bout de seulement 200 cycles.

### Exemple 3

Cet exemple illustre l'amélioration de la résistance à la sollicitation, obtenue avec un matériau multicouches selon l'invention comportant une sous-couche de nitrure d'aluminium

### Exemple 3A

Des dépôts multicouches W/W(C) de 50 µm sont réalisés par pulvérisation cathodique sur un substrat d'aluminium anodisé.

Les éprouvettes sont ensuite évaluées sur un banc d'érosion.

### Exemple 3B

De manière analogue à l'exemple 3B, on réalise des dépôts multicouches W/W(C) d'une épaisseur de 50 µm par pulvérisation cathodique, à la différence que le substrat d'aluminium anodisé est, conformément à l'invention, préalablement traité par nitruration ionique de manière à ce qu'il soit ainsi pourvu d'une sous-couche selon l'invention constituée de nitrure d'aluminium.

Les éprouvettes ainsi préparées sont ensuite évaluées sur un banc d'érosion de la même manière que dans l'exemple 3A.

Pour une même quantité de particules d'érodant, la perte de masse des éprouvettes selon l'art antérieur (exemple 3A) n'ayant pas subi de prétraitement de nitruration, est cinq fois supérieure à celle des éprouvettes selon l'invention (exemple 3B) préalablement nitrurées c'est-à-dire comportant une sous-couche de nitrure d'aluminium.

## Revendications

1. Matériau multicouches comprenant un substrat en aluminium, en magnésium ou en un de leurs alliages, et un revêtement anti-érosion, anti-abrasion et anti-usure comprenant un dépôt à base de tungstène, ledit revêtement comprenant en outre une sous couche d'un matériau présentant des propriétés mécaniques et thermomécaniques intermédiaires de celles dudit substrat et de celles dudit dépôt, ladite sous-couche étant intercalée entre ledit substrat et ledit dépôt à base de tungstène, caractérisé en ce que ladite sous-couche est composée d'au moins une couche d'un matériau choisi parmi le chrome, le molybdène, le niobium, le titane, le zirconium, leurs nitrures et carbures, les solutions solides de carbone et d'azote dans lesdits métaux, et les aciers.

2. Matériau multicouches selon la revendication 1, caractérisé en ce que ledit substrat a subi un traitement de surface.

3. Matériau multicouches selon la revendication 2, caractérisé en ce que ledit substrat est de l'aluminium ou un alliage d'aluminium anodisé.

4. Matériau multicouches selon la revendication 1, caractérisé en ce que ladite sous-couche est composée d'un empilement de plusieurs couches.

5. Matériau multicouches selon la revendication 1, caractérisé en ce que ladite sous-couche est composé d'un empilement de couches métalliques constituées de Cr, Mo, Nb, Zr, Ti ou d'acier .

6. Matériau multicouches selon la revendication 4, caractérisé en ce que ladite sous-couche est composée d'un empilement comprenant une première couche métallique de Cr, Mo, Nb, Zr, ou Ti, et une deuxième couche de nitrure ou carbure du même métal que ladite première couche métallique, ou d'une solution solide d'azote ou de carbone dans le même métal que ladite première couche métallique.

7. Matériau multicouches selon la revendication 6, caractérisé en ce que ledit empilement comprend en outre une couche à gradient de composition assurant une transition progressive entre ladite première couche et ladite deuxième couche dudit empilement.

8. Matériau multicouches selon la revendication 1, caractérisé en ce que ladite sous-couche est constituée d'une couche de nitrure d'aluminium ou de magnésium.

9. Matériau multicouches selon la revendication 1, caractérisé en ce que ladite sous-couche est constituée d'une couche aluminium-tungstène à gradient de composition dans laquelle on passe progressivement de l'aluminium pur au tungstène pur.

10. Matériau multicouches selon la revendication 1, caractérisé en ce que ladite sous-couche est constituée d'une couche d'oxyde d'aluminium.

11. Matériau multicouches selon l'une quelconque des revendications 1 à 10, caractérisé en ce que la ou lesdites couche(s) ont une épaisseur de 0,01 à 10 µm.

12. Matériau multicouches selon l'une quelconque des revendications 1 à 11, caractérisé en ce que ledit dépôt à base de tungstène comprend au moins une couche en un matériau choisi parmi le tungstène, les alliages de tungstène, les carbures, siliciures et nitrures de tungstène, et leur mélanges, et les solutions solides d'azote ou de carbone dans le tungstène.

13. Matériau multicouches selon l'une quelconque des revendications 1 à 12, caractérisé en ce que ledit dépôt à base de tungstène a une épaisseur de 5 à 60 µm.

14. Matériau multicouches selon l'une quelconque des revendications 1 à 13, caractérisé en ce que l'épaisseur totale dudit revêtement est de 5 à 70 µm.

15. Revêtement anti-érosion, anti-abrasion et anti-usure, pour substrat en aluminium, en magnésium ou en un de leurs alliages, comprenant un dépôt à base de tungstène, ledit revêtement comprenant en outre une sous-couche d'un matériau présentant des propriétés mécaniques et thermomécaniques intermédiaires de celles dudit substrat et de celles dudit dépôt, caractérisé en ce que ladite sous-couche est composée d'au moins une couche d'un matériau choisi parmi le chrome, le molybdène, le niobium, le titane, le zirconium, leurs nitrures et carbures, les solutions solides de carbone et d'azote dans lesdits métaux, et les aciers.
